# EUROPEAN PATENT SPECIFICATION

(11) **EP 4 573 522 B1**
(45) Date of publication and mention of the grant of the patent: **13.05.2026**
(21) Application number: 23741735.7
(22) Date of filing: 20.07.2023
(51) Int. Cl.: G06T 17/00, G06T 19/20, G06T 7/50

(54) **3D RECONSTRUCTION OF A TARGET**
3D-REKONSTRUKTION EINES ZIELOBJEKTS
RECONSTRUCTION 3D D'UN OBJET CIBLE

(30) Priority: 17.08.2022 EP 22190722; 17.08.2022 GB 202211987
(43) Date of publication of application: 25.06.2025
(73) Proprietor: British Telecommunications public limited company, London, Greater London E1 8EE (GB)
(72) Inventor: ZHAO, Zi-Chuan, London E1 8EE (GB); PENA-RIOS, Anasol, London E1 8EE (GB); CLARK, Adrian, London E1 8EE (GB); CONWAY, Anthony, London E1 8EE (GB)
(74) Representative: British Telecommunications public limited company Intellectual Property Department
(86) International application number: PCT/EP2023/070218
(87) International publication number: WO 2024/037822

(56) References cited:
- WO-A1-2021/184933
- JERRY LIU ET AL: "Interactive 3D Modeling with a Generative Adversarial Network", ARXIV.ORG, CORNELL UNIVERSITY LIBRARY, 201 OLIN LIBRARY CORNELL UNIVERSITY ITHACA, NY 14853, 16 June 2017 (2017-06-16), XP081306205
- XIE HAOZHE ET AL: "Pix2Vox++: Multi-scale Context-aware 3D Object Reconstruction from Single and Multiple Images", INTERNATIONAL JOURNAL OF COMPUTER VISION, SPRINGER, vol. 128, no. 12, 15 July 2020 (2020-07-15), pages 2919 - 2935, XP037257767, DOI: 10.1007/S11263-020-01347-6
- RODRÍGUEZ AGUILERA ALEJANDRO ET AL: "A parallel resampling method for interactive deformation of volumetric models", COMPUTERS AND GRAPHICS, ELSEVIER, GB, vol. 53, 20 October 2015 (2015-10-20), pages 147 - 155, XP029315335, ISSN: 0097-8493, DOI: 10.1016/J.CAG.2015.10.002
- SIMON GIEBENHAIN ET AL: "AIR-Nets: An Attention-Based Framework for Locally Conditioned Implicit Representations", ARXIV.ORG, CORNELL UNIVERSITY LIBRARY, 201 OLIN LIBRARY CORNELL UNIVERSITY ITHACA, NY 14853, 22 October 2021 (2021-10-22), XP091079773

## Description

The present invention relates to a computer-implemented method and system for interactive 3D reconstruction of a target.

### Background

A digital twin system may be used for the creation of 3D model of a target such as an object. Augmented Reality (AR) and Virtual Reality (VR) technologies and their applications with digital twin systems often rely upon 3D virtual representations of complex physical objects. The improvements in the accuracy of the virtual representation and level of detail that can be reproduced can assist in the optimization of AR and VR applications and provide an improved user experience. Fast, automatic creation of virtual representations from physical objects provides a challenge to the AR and VR industry.

3D reconstruction is a technique which attempts to recover the original 3D shape of an object or scene from input data such as, for example, one or more images, or from a point cloud acquired from a scanning device. One technique for 3D reconstruction is implicit field reconstruction in which the output target is represented as a scalar field in the 3D space.

Deep learning based implicit reconstruction systems can be classified into two categories, the forward class, and the converging class. In forward-class algorithms, the input data is first encoded to a latent code by an encoder neural network, and then decoded into the implicit field by a decoder neural network by the learned parameters. This category of architecture is capable of reconstructing 3D shapes from learned priors which reduces noise and prevents missing parts in the reconstruction. However, it performs poorly when reproducing targets not encountered in the training set and tends to over-smooth the output. The converging-class tries to learn a neural network that represents the entire implicit field for each individual object. This class performs better at reproducing details but is less reliable at reproducing the shape of an object and takes longer for individual objects. It is desirable therefore to overcome the shortcomings of the two classes to be able to produce a 3D reconstruction in a manner which is able to accurately reproduce the shape of the target while also being able to efficiently recreate complex details.

WO2021/184933 A1 discloses a method of 3D human body model reconstruction based on artificial intelligence. Based on a target image, a 3D model of the entire human body, and a 3D sub-model of a part of the human body can be obtained by using a neural network model and/or a parameterization model, which are fused to obtain a fused 3D human body model.

### Summary of the invention

According to a first aspect of the present invention, there is provided a method for 3D reconstruction of a physical object, the method comprising: obtaining an initial global reconstruction of the physical object in a 3D space, inferred by a global machine learning model trained to reconstruct a 3D model representation of an entirety of the physical object in 3D space from data that has been sampled from the physical object; providing, to a user, an initial visualisation of the physical object based on the reconstruction; receiving, from the user, at least one indication of at least one point of interest in the visualisation; resampling at least one first subsection of the physical object based on the at least one point of interest to obtain local data, wherein the local data is associated with the subsection based on spatial information that associates the local data with a point in 3D space; inputting the resampled local data and spatial information into a local feature machine learning model to obtain at least one local 3D reconstruction of the physical object, wherein the local feature machine learning model has been trained to output a target reconstruction from local data of resampled subsections, and wherein the 3D coordinate system of the local 3D reconstruction aligns with the global 3D reconstruction; and merging the global 3D reconstruction with the local 3D reconstruction.

Preferably, the steps of the method are performed iteratively using the merged reconstruction and the further visualisation based on the merged reconstruction as the initial global reconstruction and initial visualisation in the next iteration until receiving, from the user, an indication to step.

Preferably, the global model is an encoder-decoder network comprising a global encoder trained to infer a global latent code from the physical object **target** data, and the local feature machine learning model comprises an encoder-decoder network, the local feature encoder-decoder network comprising: a local feature encoder trained to infer a local feature latent code form the resampled local data and spatial information; and a local feature decoder trained to infer a representation of the physical object **target** in the 3D space from a combination of the local feature latent code and the global latent code.

Preferably, the local 3D reconstruction comprises at least one reconstruction of at least one additional subsection of the physical object **target** that is inferred by the local feature decoder based on the local data of the at least one first subsection and at least one property of the physical object's structure or shape, such as symmetry, learned by the global encoder.

Preferably, obtaining a global reconstruction of the physical object in a 3D space comprises inputting the global latent code to the local feature decoder wherein the local feature decoder is also trained to infer, from the global latent code, a global representation of the physical object in the 3D space.

Preferably, merging the global 3D reconstruction and the local 3D reconstruction comprises: receiving, from the local feature decoder, a local reconstruction corresponding to each point of interest; receiving, from the local feature decoder, weight information comprising a weight value for each point in space for each local reconstruction and the global reconstruction; and merging the global reconstruction and the at least one local reconstruction based on the weight information.

Preferably, resampling the physical object based on the at least one point of interest comprises resampling a subspace in the global 3D space centred on the at least one point of interest.

Preferably, the local and global 3D reconstructions are each a scalar field representing the occupation probability of a point in space and wherein merging the global 3D reconstruction with the local 3D reconstruction comprises: combining the scalar field values of the global 3D reconstruction with the scalar field values of the local 3D reconstruction; and extracting a probability iso-surface from the combined scalar field to represent the shape of the physical object for visualisation.

According to a second aspect of the present invention, there is provided a computer system comprising a processor and a memory storing computer program code for performing the steps of the method set out above.

According to a third aspect of the present invention, there is provided a computer program or readable medium comprising computer program code to, when loaded on and executed by a computer, causes the computer to carry out the steps of the method set out above.

### Brief Description of the Drawings

Embodiments of the present invention are now described, by way of example only, with reference to the accompanying drawings, in which:
Figure 1 is a flowchart showing steps of a method in accordance with an embodiment of the present invention.
Figure 2 is a flow diagram showing additional optional steps of the method of figure 1.
Figure 3 is a flowchart showing additional optional steps of the method of figure 1.
Figure 4 is a flow diagram showing additional optional steps of the method of figure 1
Figure 5 is a component diagram of a computer system suitable for the operation of embodiments of the present invention.

### Detailed Description of the Invention

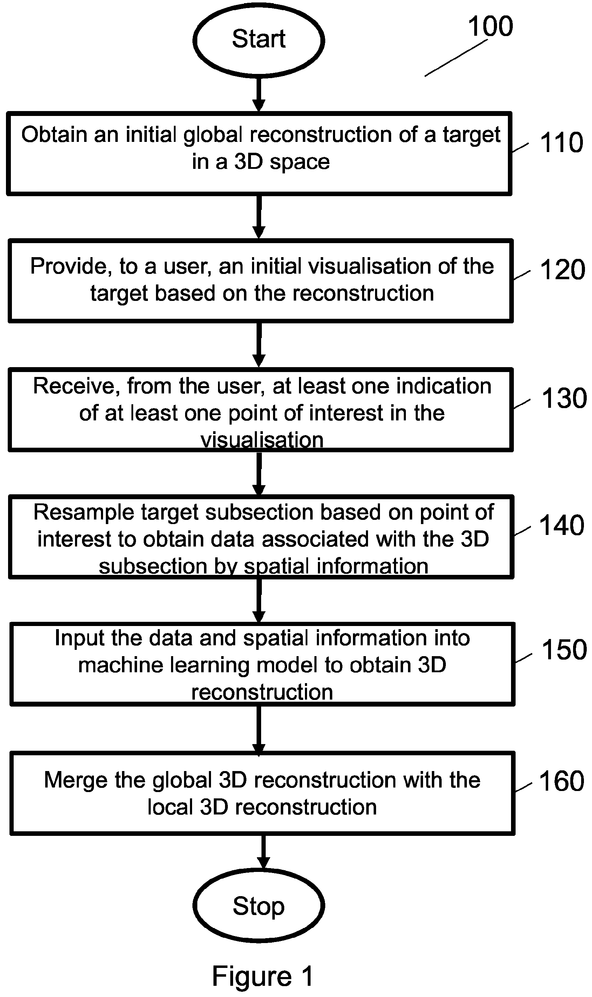

Figure 1 is a flowchart showing steps for carrying out a method 100 in accordance with embodiments of the present invention. At step 110, an initial global reconstruction of a target in a 3D space is obtained. The target may be any three dimensional object. The initial global reconstruction is generated by a global model that is trained to reconstruct a 3D representation of the entirety of a target in 3D space from data that has been sampled from the target. In some examples, the global model may be provided the sample target data to obtain the global reconstruction. In other examples, the global reconstruction may be received from an external source; the external source may itself have generated the global reconstruction using a global model.

A sampling device may be used to acquire data on the target with spatial information that indicates a position in 3D space associated with the acquired data points. For example, a scanner may be used to scan an object surface to provide a point cloud that associates data captured by the scanner with a point in 3D space that corresponds to the position and angle of the scanner with acquiring the data. Alternatively, the model may be provided an image or multiple images captured by a camera along with information that indicates the position and angle of the camera view relative to the target. The data may be acquired directly from the sampling device or may be provided to the model from a database.

In some examples, the global model is an encoder-decoder network comprising an encoder and a decoder wherein the encoder is trained to output a global latent code from the acquired target data and spatial information and wherein the decoder is trained to output, from the global latent code, a 3D reconstruction of the target.

In one example, the global reconstruction is an implicit reconstruction. In particular, the global reconstruction may be an occupational probability scalar field wherein the decoder of the global encoder-decoder network is provided a set of query points comprising a set of points in the 3D space with the global latent code and outputs a scalar value between 0 and 1 representing the probability of each query point being occupied by the object. Other techniques for 3D global reconstruction of a target are known to the skilled person and may be used in place of implicit reconstruction.

At step 120, an initial visualisation of the target, based on the initial global reconstruction, is provided to a user, for example, via a computer display. The visualisation may be a 2D or 3D image representation of the reconstruction. This allows the user to observe the visualisation and be able to determine a point in the visualisation that does not satisfy the user's expectation or which the user is otherwise interested in. At step 130, at least one indication of at least one point of interest in the visualisation is received from the user. This spatial point that the user has indicated may be referred to as a "seed". The user may indicate more than one seed. At step 140, at least one first subsection of the target is resampled based on the point of interest, or "seed", to obtain local data associated with the subsection. For example, the seed is set at a point in the 3D space of the global representation and the subsection to be resampled is defined based on its relative position to the seed in space. In one example, a subspace in the global 3D space centred on the at least one point of interest may be resampled; this may be a sphere or cube or other defined shape around the seed.

The local data is associated with the subsection based on spatial information that associates the local data with a point in 3D space. The local data may be retrieved from the original data used to infer the initial global reconstruction or it may be resampled directly from the target using the same type of sampling device as the original target data. For example, if the global reconstruction was inferred from a point cloud where the points are associated with a 3D coordinate, the resampled data is also scanned by a device that produces a point cloud with points associated with a 3D coordinate. In another example, if the global reconstruction was inferred from multiple camera images, the resampled data may come from camera image which are associated with a position, angle and field of view relative to the target. The local data may then be obtained based on the 3D coordinate associated with the data being within the corresponding coordinates of the 3D subsection in the 3D space. If the 3D coordinate of the original data lies within the subsection marked by the seed, that data may be retrieved to compose the local data. If the target is being resampled directly, the sampling device may associate the acquired data with a 3D coordinate. In some examples, the local data may be sampled at a different resolution than the original data.

At step 150, the local data and corresponding spatial information is input into a local feature machine learning model to obtain a 3D reconstruction of the target. The local feature model is trained to output a target reconstruction from local data of resampled subsections. By providing the spatial information such that the 3D coordinates of the local data can be aligned with the coordinates of the reconstruction space, the 3D coordinates of the local reconstruction may align with the 3D coordinates of the global reconstruction. For example, the same point relative to the target may be set as an origin point in each coordinate system when sampling both the original global data and the local data.

At step 160, the global 3D reconstruction is merged with the local 3D reconstruction. The merging may be determined differently depending on different calculations based on different architectures of the models and different modes of reconstruction. For one example, both the local and global reconstructions may comprise shapes which are to be aligned and combined; in another example, the local reconstruction may comprise a set of values representing differences from the global reconstruction. Because the local model is trained on subsections of the target, the knowledge representation of the local features will be different from that of the target globally. For example, the global model will reproduce closed shapes representing an entire physical object while the local feature model does not. The shapes of local features may occur in different distributions to global features. Beneficially, the local reconstruction may more accurately represent the details of the shape of the target where the user is most interested, around the seed.

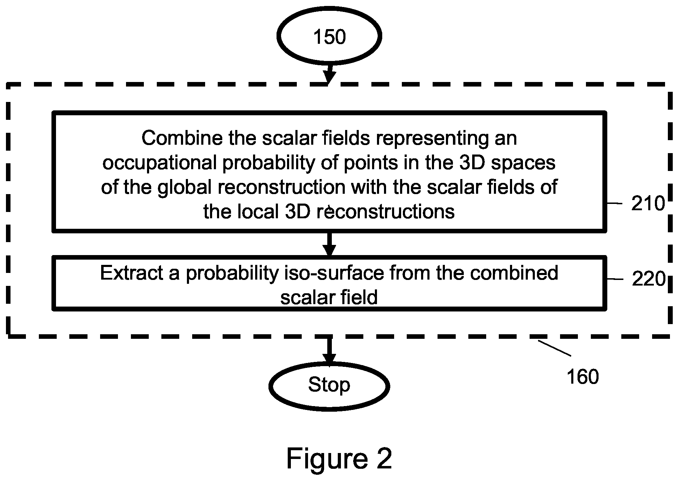

Figure 2 is a flow diagram showing steps for carrying out method 100 comprising additional steps 210 and 220. Step 150 has already been described in relation to figure 1. In some examples, the local and global 3D reconstructions are each a scalar field representing the occupation probability of a point in space. Implementations of such implicit reconstructions will be known to the person skilled in the art. A model may be trained to infer a function over a 3D space of the probability of the point in space being occupied and then is provided a set of discrete points in 3D space, the query points, which are then assigned values by the function. In such examples, the step 160 may comprise a step 210 wherein the scalar field values of the global 3D reconstruction are combined with the scalar field values of the local 3D reconstruction. For example, both the local and global reconstruction field values are probabilities between 0 and 1, and the two are added together based on a weighted sum.

Weight information comprising a weight value for each point in space for each local reconstruction and the global reconstruction may be calculated. The scalar field value for each point in space in the combined scalar field may then be the sum of the products of the weight value with the field value of the point of space in each reconstruction.

After step 210, step 160 may further comprise step 220 in which a probability iso-surface is extracted from the combined scalar field to represent the shape of the target for visualisation. For example, a value, or range of values, may be set or calculated to be the occupation probability value that represents the start of the surface of the target. The coordinates of the areas in space that contain points, or lie within points, that have this occupational probability value are extracted such that a visualisation of the target with a surface at those coordinates could be built.

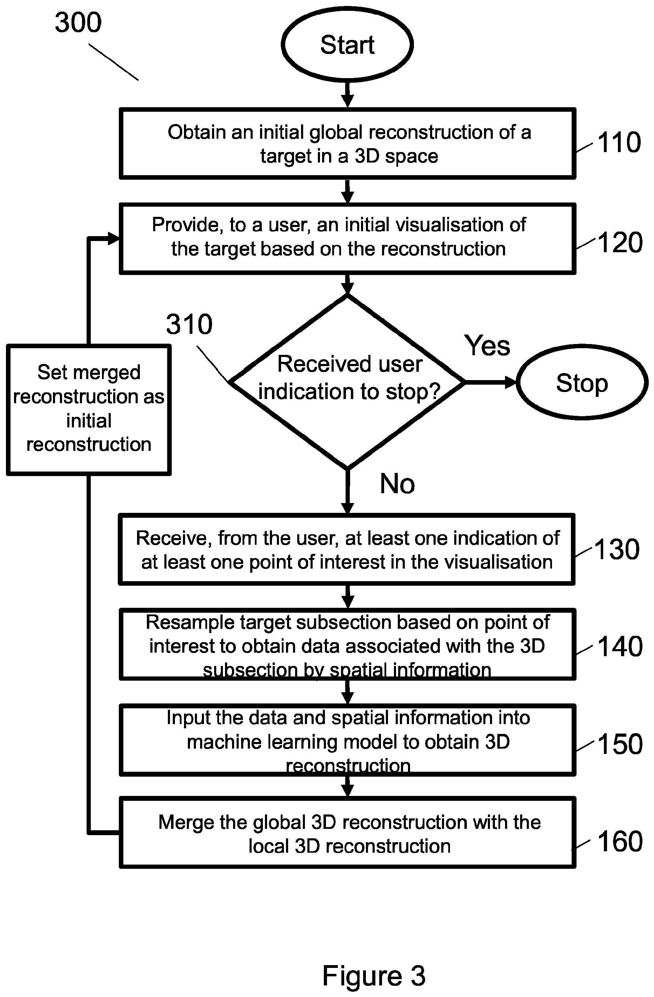

Figure 3 is a flowchart showing steps for carrying out method 300 in accordance with embodiments of the current invention. Method 300 comprises the steps of method 100 with the same steps indicated with the same reference numerals as in figure 1 and the description of the same steps not repeated here. The steps of the method are performed iteratively using the merged reconstruction and the further visualisation based on the merged reconstruction as the initial global reconstruction and initial visualisation in the next iteration until receiving, from the user, an indication to stop. Method 300 may comprise step 310, after the user is provided an initial visualisation of the target, in which the method checks if it has received from the user an indication to stop. If it does, the method stops, if not, the method continues with step 130. This allows the user to observe the merged reconstruction and to place a seed at further points of interest or at the same point if the reconstruction is still not to their satisfaction. Each iteration of the steps may individually further improve the quality of the visual reconstruction at the target around the seeds. Outputs from the global model and the local feature model, such as the 3D reconstructions corresponding to each seed and their corresponding weightings, may be stored in a memory after the iteration in which they are generated, to allow the system to avoid recalculating the entire output at each iteration. The user may observe the level of improvement and then halt the process when they are satisfied with the quality of the reconstruction or when the rate of improvement has peaked.

In the examples described above, the global model may be an encoder-decoder network comprising a global encoder trained to infer a global latent code from the target data, and the local feature machine learning model may comprise an encoder-decoder network comprising a local feature encoder and a local feature decoder. The local feature encoder may be trained to infer a local feature latent code from the resampled local data and spatial information and the local feature decoder may be trained to infer a representation of the target in the 3D space from a combination of the local feature latent code and the global latent code. In examples where the method is applied iteratively, the latent codes may be stored in a memory after the iteration in which they are generated. The encoder-decoder networks may be deep-learning networks comprising multiple layers. In this case, the encoder can be considered to refer to the layers before the global latent code layer that is input into the local feature decoder, and the decoder can be considered to be the layers after which the latent code layer from either the local feature model or the global model can be input into the local feature model. The global latent code layer is a latent representation of the encoded information that implicitly represents the information of the structure and shape of the target learned by the global model. The local feature decoder can infer a representation of the target across all of the global 3D space, with greater accuracy at the local subsections of the 3D space corresponding to the resampled local data. Furthermore, because the local feature decoder has been trained to infer a representation of the target in the total 3D space from both the local feature latent code and the global latent code, the local feature decoder may use the properties of the target that have been learned by the global encoder to reconstruct additional subsections of the target, outside of the resampled subsection, with greater accuracy For example, the global encoder may have inferred that the target has a symmetry in its shape. Prior information about that symmetry may be encoded in the global latent code. The local feature decoder may then infer from that prior information that there are subsections of the target that correspond under symmetry to the subsection resampled based on the seed; for example if the seed was placed at the foot of a table leg of a rectangular table and the global encoder has inferred the rectangular symmetry of the table, the local feature decoder may infer that the other three feet of the table will match the foot where the seed is placed. The subsections that correspond to the resampled subsection under symmetry, such as the other three table feet, may then also be inferred by the local feature decoder, within the total 3D reconstruction, with greater accuracy, given the local feature latent code.

In some examples, the global encoder-decoder network comprises a separate global decoder that is trained to infer the initial global 3D reconstruction from the global latent code. In other examples, the same decoder may be used for both the global network and the local feature network and the global latent code is input to the local feature decoder to obtain the initial global reconstruction, and the local feature decoder is also trained to infer a global representation of the target in the 3D space from the global latent code. While the parameters of the global network and the local feature network will be different due to the different set of inputs on which they will be trained, because they both relate to reconstruction of the same set of targets, some parameters will be shared. Thus sharing the same decoder for both the global network and the local feature network is more space efficient.

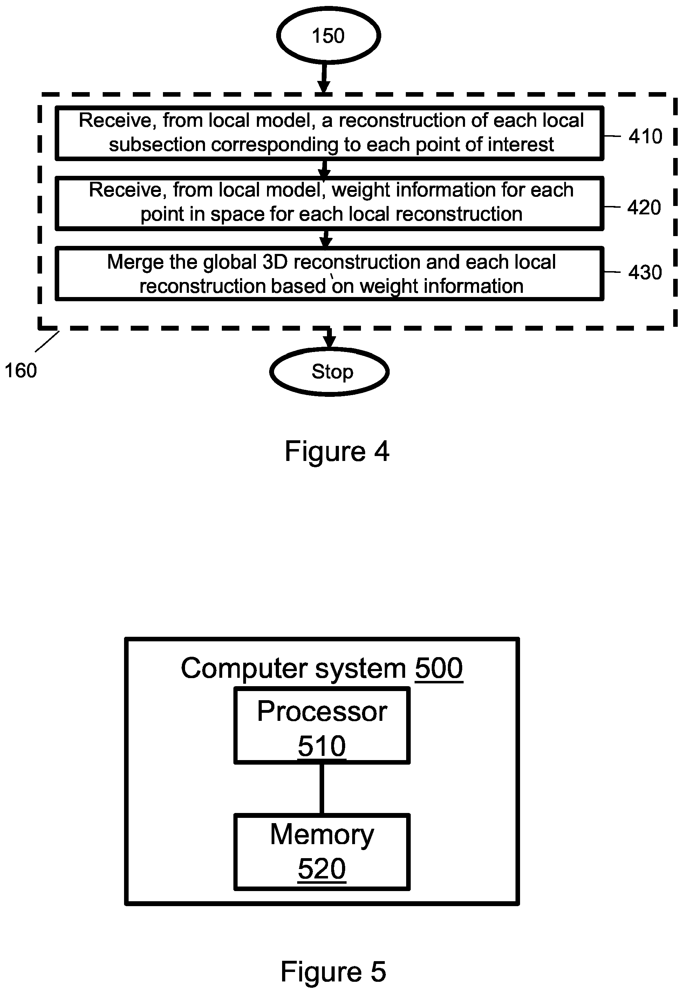

Figure 4 is a flowchart showing steps for carrying out a method 100 comprising additional steps 410, 420 and 430. Steps 110-150 are carried out as described above. In one example, the local feature decoder may also be trained to infer weight information comprising a weight value for each point in space for each local reconstruction based on the combined local feature latent code and the global latent code. In this case, step 160 of merging the global 3D reconstruction and the local 3D reconstruction may comprise: step 410 of receiving from the local feature decoder, each local reconstruction that corresponds to each seed; step 420 of receiving the weight information from the local feature decoder; and step 430 of merging the global reconstruction and the one or more local reconstructions based on the weight information.

When the global and local reconstructions are occupational probability scalar field reconstructions, step 430 can be carried out using steps 210 and 220 as described in relation to figure 2 above. Use of an encoder-decoder architecture for occupational probability field global reconstruction aids in eliminating noise and the risk of missing parts at the cost of possible over-smoothing in the final reconstruction that eliminates surface details of the target. The local reconstructions help compensate by more accurately reflecting surface details and by allowing the local network to reprocess the area of interest with an additional sample without having to reprocess the entire target data.

By training the local feature network to infer the weight information by using a loss function based on the merged reconstruction, the weight values will correspond to the subsections of the total 3D reconstruction of the target that will be reconstructed more accurately. The parts of the local feature reconstruction that have been reconstructed based on the resample subsections of the target, or based on the resampled subsections of the target and a target property learned by the global encoder, may be weighted higher. For example, the resampled data may correspond to a subsection of the target in a 3D space at a fixed distance from the seed. The weight value for points in space that are within that fixed distance may be higher than those for points in space outside of it, and the weight values may decline as the points in space get further from the seed. The weight values of the points in space of the global reconstruction may be higher outside of the fixed distance from the seed, as the global reconstruction may be necessarily relied on or may produce a more accurate representation outside of the resampled subsection. Because the weight information is output from the local feature decoder, the local feature decoder can determine the weight values based on properties of the target inferred by the global encoder. For example, the weight values for a local reconstruction can be based on the symmetry or shape of the target inferred by the global encoder. Points in space that are part of additional subsections of the target in the reconstruction that correspond, under symmetry, to the first subsection that was resampled based on the seed, may be weighted higher. The local feature decoder may also determine a confidence level of the values of the scalar field output and the weight values may reflect the confidence level so that a local reconstruction or global reconstruction which has lower confidence values for its reconstruction at a particular point in space is weighted lower.

Figure 5 is a component diagram of a computer system 500 suitable for the operation of embodiments of the present invention. System 500 may perform any of the methods described herein that correspond to embodiments of the present invention. System 500 comprises a processor 510 and a memory 520. Memory 520 may store computer program code or computer executable instructions that when executed by the processor 510 causes the processor to carry out the any of the methods described herein. In some examples the processor may comprise one or more processors, each of which may perform steps of the method as described above.

Insofar as embodiments described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. The computer program may be embodied as source code or undergo compilation for implementation on a processing device, apparatus or system or may be embodied as object code, for example.

Suitably, the computer program is stored on a non-transitory carrier medium in machine or device readable form, such as in the form of a computer readable medium. In examples, the medium can be one or more of a solid-state memory, magnetic memory such as disk or tape, optically or magneto-optically readable memory such as compact disk or digital versatile disk etc., and the processing device utilises the program or a part thereof to configure it for operation. The computer program may be supplied from a remote source embodied in a communications medium such as an electronic signal, radio frequency carrier wave or optical carrier wave. Such carrier media are also envisaged.

## Claims

1. A computer-implemented method for 3D reconstruction of a physical object, the method comprising:
obtaining an initial global reconstruction of the physical object in a 3D space, inferred by a global machine learning model trained to reconstruct a 3D representation of an entirety of the physical object in 3D space from data that has been sampled from the physical object;
providing, to a user, an initial visualisation of the physical object based on the reconstruction;
receiving, from the user, at least one indication of at least one point of interest in the visualisation;
resampling at least one first subsection of the physical object based on the at least one point of interest to obtain local data, wherein the local data is associated with the subsection based on spatial information that associates the local data with a point in 3D space;
inputting the resampled local data and spatial information into a local feature machine learning model to obtain at least one local 3D reconstruction of the physical object, wherein the local feature machine learning model has been trained to output a physical object reconstruction from local data of resampled subsections, and wherein the 3D coordinate system of the local 3D reconstruction aligns with the global 3D reconstruction; and
merging the global 3D reconstruction with the local 3D reconstruction.

2. The method of claim 1, wherein the steps of the method are performed iteratively using the merged reconstruction as the initial global reconstruction in the next iteration until receiving, from the user, an indication to stop.

3. The method claims of 1 or 2, wherein the global model is an encoder-decoder network comprising a global encoder trained to infer a global latent code from the physical object data, and wherein the local feature machine learning model comprises a local feature encoder-decoder network, the local feature encoder-decoder network comprising:
a local feature encoder trained to infer a local feature latent code from the resampled local data and spatial information; and
a local feature decoder trained to infer a representation of the physical object in the 3D space from a combination of the local feature latent code and the global latent code.

4. The method of claim 3 wherein the local 3D reconstruction comprises at least one reconstruction of at least one additional subsection of the physical object that corresponds to the at least one first subsection under symmetry, wherein the reconstruction of the at least one additional subsection is inferred by the local feature decoder based on the local data of the at least one first subsection and said symmetry, learned by the global encoder.

5. The method of claim 3 or 4 wherein obtaining a global reconstruction of the physical object in a 3D space comprises:
inputting the global latent code to the local feature decoder wherein the local feature decoder is trained to infer, from the global latent code, a global representation of the physical object in the 3D space.

6. The method of claims 3, 4, or 5 wherein merging the global 3D reconstruction and the local 3D reconstruction comprises:
receiving, from the local feature decoder, a local reconstruction corresponding to each point of interest;
receiving, from the local feature decoder, weight information comprising a weight value for each point in space for each local reconstruction; and
merging the global reconstruction and the at least one local reconstruction based on the weight information;
wherein the local feature decoder is trained to infer the weight information based on the combined local feature latent code and the global latent code by using a loss function based on the merged reconstruction, wherein the parts of the local 3D reconstruction that have been reconstructed based on the resampled at least one first subsection of the physical object are weighted higher.

7. The method of any preceding claim wherein resampling the physical object based on the at least one point of interest comprises resampling a subspace in the global 3D space centred on the at least one point of interest.

8. The method of any preceding claim, wherein the local and global 3D reconstructions are each a scalar field representing an occupation probability of a point in space and wherein merging the global 3D reconstruction with the local 3D reconstruction comprises:
combining the scalar field values of the global 3D reconstruction with the scalar field values of the local 3D reconstruction; and, optionally,
extracting a probability iso-surface from the combined scalar field to represent the shape of the physical object for visualisation.

9. A computer system comprising a processor and a memory storing instructions executable by the processor to cause the processor to perform the method of any preceding claims.

10. A computer readable medium comprising computer program code to, when loaded on and executed by a computer, causes the computer to carry out the method of any of claims 1 to 8.

## Patentansprüche

1. Computerimplementiertes Verfahren zur 3D-Rekonstruktion eines Zielobjekts, das Verfahren umfassend:
Erhalten einer anfänglichen globalen Rekonstruktion des physischen Objekts in einem 3D-Raum, die durch ein globales Maschinenlernmodell abgeleitet wird, das darauf trainiert ist, eine 3D-Darstellung der Gesamtheit des physischen Objekts im 3D-Raum aus Daten zu rekonstruieren, die von dem physischen Objekt abgetastet wurden;
Bereitstellen, für einen Benutzer, einer anfänglichen Visualisierung des physischen Objekts basierend auf der Rekonstruktion;
Empfangen, von dem Benutzer, von mindestens einer Angabe von mindestens einem Punkt von Interesse in der Visualisierung;
erneutes Abtasten mindestens eines ersten Teilabschnitts des physischen Objekts basierend auf dem mindestens einen Punkt von Interesse, um lokale Daten zu erhalten, wobei die lokalen Daten dem Teilabschnitt basierend auf räumlichen Informationen zugeordnet sind, die die lokalen Daten einem Punkt im 3D-Raum zuordnen;
Einspeisen der erneut abgetasteten lokalen Daten und der räumlichen Informationen in ein Maschinenlernmodell mit lokalen Merkmalen, um mindestens eine lokale 3D-Rekonstruktion des physischen Objekts zu erhalten, wobei das Maschinenlernmodell mit lokalen Merkmalen darauf trainiert ist, eine Rekonstruktion des physischen Objekts aus lokalen Daten erneut abgetasteter Teilabschnitte auszuführen, und wobei das 3D-Koordinatensystem der lokalen 3D-Rekonstruktion mit der globalen 3D-Rekonstruktion ausgerichtet ist; und
Zusammenführen der globalen 3D-Rekonstruktion mit der lokalen 3D-Rekonstruktion.

2. Verfahren nach Anspruch 1, wobei die Schritte des Verfahrens unter Verwendung der zusammengeführten Rekonstruktion als die anfängliche globale Rekonstruktion in der nächsten Iteration iterativ durchgeführt werden, bis von dem Benutzer eine Angabe zum Beenden empfangen wird.

3. Verfahren nach einem der Ansprüche 1 oder 2, wobei das globale Modell ein Codierer-Decodierer-Netzwerk ist, das einen globalen Codierer umfasst, der darauf trainiert ist, aus Daten des physischen Objekts einen globalen latenten Code abzuleiten, und wobei das Maschinenlernmodell mit lokalen Merkmalen ein Codierer-Decodierer-Netzwerk für lokale Merkmale umfasst, wobei das Codierer-Decodierer-Netzwerk für lokale Merkmale umfasst:
einen Codierer für lokale Merkmale, der darauf trainiert ist, aus den erneut abgetasteten lokalen Daten und den räumlichen Informationen einen latenten Code für lokale Merkmale abzuleiten; und
einen Decodierer für lokale Merkmale, der darauf trainiert ist, aus einer Kombination des latenten Codes für lokale Merkmale und des globalen latenten Codes eine Darstellung des physischen Objekts im 3D-Raum abzuleiten.

4. Verfahren nach Anspruch 3, wobei die lokale 3D-Rekonstruktion mindestens eine Rekonstruktion von mindestens einem zusätzlichen Teilabschnitt des physischen Objekts umfasst, der dem mindestens einen ersten Teilabschnitt unter einer Symmetrie entspricht, wobei die Rekonstruktion des mindestens einen zusätzlichen Teilabschnitts durch den Decodierer für lokale Merkmale basierend auf den lokalen Daten des mindestens einen ersten Teilabschnitts und der Symmetrie, die durch den globalen Codierer gelernt wurde, abgeleitet wird.

5. Verfahren nach Anspruch 3 oder 4, wobei das Erhalten einer globalen Rekonstruktion des physischen Objekts in einem 3D-Raum umfasst:
Einspeisen des globalen latenten Codes in den Decodierer für lokale Merkmale, wobei der Decodierer für lokale Merkmale darauf trainiert ist, aus dem globalen latenten Code eine globale Darstellung des physischen Objekts im 3D-Raum abzuleiten.

6. Verfahren nach einem der Ansprüche 3, 4 oder 5, wobei das Zusammenführen der globalen 3D-Rekonstruktion und der lokalen 3D-Rekonstruktion umfasst:
Empfangen, von dem Decodierer für lokale Merkmale, einer lokalen Rekonstruktion, die jedem Punkt von Interesse entspricht;
Empfangen, von dem Decodierer für lokale Merkmale, von Gewichtungsinformationen, die für jede lokale Rekonstruktion einen Gewichtungswert für jeden Punkt im Raum umfassen; und
Zusammenführen der globalen Rekonstruktion und der mindestens einen lokalen Rekonstruktion basierend auf den Gewichtungsinformationen;
wobei der Decodierer für lokale Merkmale darauf trainiert ist, die Gewichtungsinformationen basierend auf dem kombinierten latenten Code für lokale Merkmale und dem globalen latenten Code unter Verwendung einer Verlustfunktion basierend auf der zusammengeführten Rekonstruktion abzuleiten, wobei die Teile der lokalen 3D-Rekonstruktion, die basierend auf dem erneut abgetasteten mindestens einen ersten Teilabschnitt des physischen Objekts rekonstruiert wurden, höher gewichtet werden.

7. Verfahren nach einem der vorhergehenden Ansprüche, wobei das erneute Abtasten des physischen Objekts basierend auf dem mindestens einen Punkt von Interesse das erneute Abtasten eines Teilraums im globalen 3D-Raum umfasst, der auf dem mindestens einen Punkt von Interesse zentriert ist.

8. Verfahren nach einem der vorhergehenden Ansprüche, wobei die lokale und die globale 3D-Rekonstruktion jeweils ein Skalarfeld sind, das eine Belegungswahrscheinlichkeit eines Punkts im Raum darstellt, und wobei das Zusammenführen der globalen 3D-Rekonstruktion mit der lokalen 3D-Rekonstruktion umfasst:
Kombinieren der Skalarfeldwerte der globalen 3D-Rekonstruktion mit den Skalarfeldwerten der lokalen 3D-Rekonstruktion; und, optional,
Extrahieren einer Wahrscheinlichkeits-Isofläche aus dem kombinierten Skalarfeld, um die Form des physischen Objekts zur Visualisierung darzustellen.

9. Computersystem, umfassend einen Prozessor und einen Speicher, der Anweisungen speichert, die durch den Prozessor ausführbar sind, um den Prozessor zu veranlassen, das Verfahren nach einem der vorhergehenden Ansprüche durchzuführen.

10. Computerlesbares Medium, umfassend Computerprogrammcode, der, wenn er auf einen Computer geladen und von diesem ausgeführt wird, den Computer veranlasst, das Verfahren nach einem der Ansprüche 1 bis 8 durchzuführen.

## Revendications

1. Procédé mis en œuvre par ordinateur de reconstruction 3D d'un objet physique, le procédé comprenant :
l'obtention d'une reconstruction globale initiale de l'objet physique dans un espace 3D, inférée par un modèle global d'apprentissage automatique entraîné à reconstruire une représentation 3D d'une totalité de l'objet physique dans un espace 3D à partir de données échantillonnées de l'objet physique ;
la fourniture, à un utilisateur, d'une visualisation initiale de l'objet physique basée sur la reconstruction ;
la réception, de la part de l'utilisateur, d'au moins une indication d'au moins un point d'intérêt dans la visualisation ;
le rééchantillonnage d'au moins une première sous-section de l'objet physique sur la base dudit ou desdits points d'intérêt afin d'obtenir des données locales, les données locales étant associées à la sous-section sur la base d'informations spatiales qui associent les données locales à un point de l'espace 3D ;
l'introduction des données locales rééchantillonnées et des informations spatiales dans un modèle d'apprentissage automatique de caractéristiques locales pour obtenir au moins une reconstruction 3D locale de l'objet physique, le modèle d'apprentissage automatique de caractéristiques locales ayant été entraîné pour délivrer une reconstruction d'objet physique à partir de données locales de sous-sections rééchantillonnées, et dans lequel le système de coordonnées 3D de la reconstruction 3D locale s'aligne avec la reconstruction 3D globale ; et
la fusion de la reconstruction 3D globale avec la reconstruction 3D locale.

2. Procédé selon la revendication 1, les étapes du procédé étant effectuées de manière itérative en utilisant la reconstruction fusionnée comme reconstruction globale initiale dans l'itération suivante jusqu'à réception d'une indication d'arrêt provenant de l'utilisateur.

3. Procédé selon les revendications 1 ou 2, le modèle global étant un réseau encodeur-décodeur comprenant un encodeur global entraîné pour inférer un code latent global à partir des données d'objet physique, et le modèle d'apprentissage automatique de caractéristiques locales comprenant un réseau encodeur-décodeur de caractéristiques locales, le réseau encodeur-décodeur de caractéristiques locales comprenant :
un encodeur de caractéristiques locales entraîné pour inférer un code latent de caractéristiques locales à partir des données locales rééchantillonnées et des informations spatiales ; et
un décodeur de caractéristiques locales entraîné pour inférer une représentation de l'objet physique dans l'espace 3D à partir d'une combinaison du code latent de caractéristiques locales et du code latent global.

4. Procédé selon la revendication 3, la reconstruction 3D locale comprenant au moins une reconstruction d'au moins une sous-section supplémentaire de l'objet physique qui correspond à la ou aux premières sous-sections sous symétrie, la reconstruction de la ou des sous-sections supplémentaires étant inférée par le décodeur de caractéristiques locales d'après les données locales de la ou des premières sous-sections et ladite symétrie, apprises par l'encodeur global.

5. Procédé de la revendication 3 ou 4, l'obtention d'une reconstruction globale de l'objet physique dans un espace 3D comprenant :
l'introduction du code latent global dans le décodeur de caractéristiques locales, le décodeur de caractéristiques locales étant entraîné à inférer, à partir du code latent global, une représentation globale de l'objet physique dans l'espace 3D.

6. Procédé selon la revendication 3, 4, ou 5 la fusion de la reconstruction 3D globale et de la reconstruction 3D locale comprenant :
la réception, en provenance du décodeur de caractéristiques locales, d'une reconstruction locale correspondant à chaque point d'intérêt ;
la réception, en provenance du décodeur de caractéristiques locales, d'informations de poids comprenant une valeur de poids pour chaque point de l'espace pour chaque reconstruction locale ; et
la fusion de la reconstruction globale et de la ou des reconstructions locales sur la base des informations de poids ;
le décodeur de caractéristiques locales étant entraîné pour inférer les informations de poids basées sur le code latent de caractéristiques locales combiné et le code latent global en utilisant une fonction de perte basée sur la reconstruction fusionnée, les parties de la reconstruction 3D locale qui ont été reconstruites sur la base de la ou des premières sous-sections rééchantillonnées de l'objet physique étant pondérées plus fortement.

7. Procédé selon l'une quelconque des revendications précédentes, le rééchantillonnage de l'objet physique sur la base dudit ou desdits points d'intérêt comprenant le rééchantillonnage d'un sous-espace dans l'espace 3D global centré sur le ou les points d'intérêt.

8. Procédé selon l'une quelconque des revendications précédentes, les reconstructions 3D locale et globale étant chacune un champ scalaire qui représente une probabilité d'occupation d'un point de l'espace et la fusion de la reconstruction 3D globale avec la reconstruction 3D locale comprenant :
la combinaison des valeurs de champ scalaire de la reconstruction 3D globale avec les valeurs de champ scalaire de la reconstruction 3D locale, et éventuellement
l'extraction d'une iso-surface de probabilité à partir du champ scalaire combiné afin de représenter la forme de l'objet physique pour une visualisation.

9. Système informatique comprenant un processeur et une mémoire stockant des instructions exécutables par le processeur pour amener le processeur à réaliser le procédé selon l'une quelconque des revendications précédentes.

10. Support lisible par ordinateur comprenant un code de programme informatique destiné, lorsqu'il est chargé sur et exécuté par un ordinateur, à amener l'ordinateur à réaliser le procédé selon l'une quelconque des revendications 1 à 8.
